# EUROPÄISCHE PATENTSCHRIFT

(11) **EP 1 932 750 B1**
(45) Veröffentlichungstag und Bekanntmachung des Hinweises auf die Patenterteilung: **07.10.2009**
(21) Anmeldenummer: 08102673.4
(22) Anmeldetag: 30.01.2006
(51) Int. Cl.: B62D 25/08

(54) **Träger für die Fronteinheit eines Kraftfahrzeugs und Montageverfahren**
Support for the front module of a vehicle and mounting method
Dispositif de support pour l'ensemble de bloc avant de véhicule automobile et procédé de montage

(30) Priorität: 18.03.2005 DE 102005013107
(43) Veröffentlichungstag der Anmeldung: 18.06.2008
(62) Teilanmeldung aus: 06101015.3
(73) Patentinhaber: Faurecia Kunststoffe Automobilsysteme GmbH, 85057 Ingolstadt (DE)
(72) Erfinder: Clapie, Yann, 85134 Stammham (DE)
(74) Vertreter: Richardt, Markus Albert

(56) Entgegenhaltungen:
- EP-A1- 1 232 932
- DE-A1- 10 228 464

## Beschreibung

Die Erfindung betrifft einen Träger für die Fronteinheit eines Kraftfahrzeugs und ein Verfahren zur Montage eines solchen Trägers.

Aus dem Stand der Technik sind verschiedene Fronteinheiten und Montageverfahren für Fronteinheiten bekannt.

Die EP 1 232 932 A1, von der die Erfindung als nächst kommenden Stand der Technik ausgeht, zeigt einen Träger für die Fronteinheit eines Kraftfahrzeugs mit einem Trägerteil zur Verbindung mit den Kotflügeln und dem Fahrgestell des Kraftfahrzeugs (vgl. die Trägerteile 7 und 13 der Figuren 1 und 2 der EP 1 232 932 A1). An dem Trägerteil wird ein Fassungsteil zur Aufnahme einer Scheinwerfereinheit und zur Verbindung mit einem Stoßfänger befestigt (vgl. hierzu das Fassungsteil 43, die Scheinwerfereinheit 21, den Stoßfänger 19 und die Führung 45 zur Befestigung des Fassungsteils an dem Trägerteil, wie in den Figuren der EP 1 232 932 A1 dargestellt).

Bei dem aus der EP 1 232 932 A1 bekannten Stand der Technik tritt das Problem auf, dass aufgrund der relativ großen Maßtoleranzen des Rohbaus einer Kraftfahrzeugkarosserie, an der die Fronteinheit zu montieren ist, bei der Montage Passungsprobleme auftreten können. Hierdurch kann das sogenannte Fugenbild, insbesondere hinsichtlich der Fugen zwischen dem Stoßfänger und der Scheinwerfereinheit und zwischen der Scheinwerfereinheit und der Frontklappe, sowie zwischen dem Stoßfänger und der Frontklappe beeinträchtigt werden.

Weitere ähnliche Fronteinheiten sind aus der FR 2 809 061 und der DE 199 46 995 A1 bekannt geworden.

Ferner ist aus der DE 600 00 006 T2 ein Frontzusammenbau für ein Fahrzeug mit einer Tragstruktur und einem Scheinwerfer bekannt, wobei der Scheinwerfer an der Tragstruktur zwischen einer vormontierten und einer endmontierten Position um eine geneigte Achse drehbar befestigt ist.

Aus der EP 1 036 730 A2 ist ein Verfahren zur toleranzgenauen Montage von Bestandteilen eines Kraftfahrzeug-Vorderwagens bekannt. Hierbei kann eine Vielzahl von sich gegenseitig beeinflussenden Toleranzen berücksichtigt werden.

Der Erfindung liegt dem gegenüber die Aufgabe zu Grunde, einen verbesserten Träger für die Fronteinheit eines Kraftfahrzeugs, eine Fronteinheit sowie ein verbessertes Montageverfahren für die Fronteinheit eines Kraftfahrzeugs zu schaffen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Ansprüchen angegeben.

Die Erfindung schafft einen Träger für die Fronteinheit eines Kraftfahrzeugs mit einem ersten Trägerteil zur Verbindung mit einem Fahrgestell des Kraftfahrzeugs und linken und rechten Fassungsteilen, wobei die linken und rechten Fassungsteile jeweils zur Aufnahme einer Scheinwerfereinheit und zur Verbindung mit einem Stoßfänger des Kraftfahrzeugs ausgebildet sind. Erfindungsgemäß werden die Fassungsteile durch elastische Elemente mit dem ersten Trägerteil verbunden. Ferner sind Mittel zur Fixierung der elastischen Elemente relativ zu dem Fahrgestell vorgesehen, wenn sich die elastischen Elemente nach einer elastischen Deformation in einer Montageposition befinden.

Die elastischen Elemente des erfindungsgemäßen Trägers ermöglichen einen Toleranzausgleich bei der Montage der Fronteinheit. Dadurch lässt sich trotz der relativ großen Maßtoleranzen des Rohbaus eines Kraftfahrzeugs, welche im Millimeterbereich liegen können, ein qualitativ hochwertiges Fugenbild erreichen. Aufwendige Nacharbeiten während der Montage können dadurch entfallen.

Nach einer Ausführungsform der Erfindung werden die elastischen Elemente mittels einer Schraubverbindung an dem ersten Trägerteil oder an dem Fahrgestell fixiert, nachdem die Fronteinheit in eine Montageposition gebracht worden ist und dort einer Deformationskraft ausgesetzt ist. Durch die Fixierung verbleiben die elastischen Elemente in dieser Deformationsposition, auch dann, wenn die Deformationskraft nicht mehr wirkt.

Nach einer Ausführungsform der Erfindung weisen die elastischen Elemente eine Auflage für eine Frontklappe eines Kraftfahrzeugs auf, so dass die Deformationskraft bei geschlossener Frontklappe auf die elastischen Elemente wirkt. Durch Schließen der Frontklappen wirkt also eine Deformationskraft im Wesentlichen in vertikaler Richtung auf die elastischen Elemente, welche diese deformiert. In dieser Deformationsposition werden die elastischen Elemente fixiert.

Nach einer Ausführungsform der Erfindung sind die elastischen Elemente so ausgebildet, dass unter Berücksichtigung der Maßtoleranzen des Kraftfahrzeugrohbaus und der Frontklappe bei geschlossener Frontklappe in jedem Fall eine Deformationskraft von der Frontklappe auf die elastischen Elemente ausgeübt wird. Hierzu können die elastischen Elemente so ausgebildet sein, dass sie etwas in Richtung auf die Frontklappe nach oben hervorstehen.

Nach einer Ausführungsform der Erfindung sind die elastischen Elemente parallelogrammartig ausgebildet. Vorzugsweise schließen die aufeinander stehenden Schenkel der elastischen Elemente einen Winkel von > 90° vor einer Deformation ein. Dadurch wird erreicht, dass die elastischen Elemente etwas nach oben hervorstehen, so dass bei Schließen der Frontklappe in jedem Fall eine Deformationskraft auf die elastischen Elemente ausgeübt wird.

Nach einer Ausführungsform der Erfindung ist ein Schenkel eines Schenkelpaars der elastischen Elemente mit dem ersten Trägerteil verbunden. Der gegenüberliegende zweite Schenkel dieses Schenkelpaars dient zur Verbindung mit einem der Fassungsteile. Dagegen dient ein Schenkel des anderen Schenkelpaars zur Einleitung der Deformationskraft.

Nach einer Ausführungsform der Erfindung ist an den parallelogrammartigen elastischen Elementen jeweils eine Aufnahme für eine Schraubverbindung angeordnet, um die elastischen Elemente in ihrer Deformationsposition zu fixieren.

Nach einer weiteren Ausführungsform der Erfindung sind die Fassungsteile an dem ersten Trägerteil über weitere elastische Elemente befestigt, wobei die weiteren elastischen Elemente für eine elastische Deformation im wesentlichen senkrecht zu der Richtung der elastischen Deformation der elastischen Elemente ausgebildet sind. Hierdurch kann ein weiterer Toleranzausgleich zum Beispiel in seitlicher, das hießt y-Richtung, geschaffen werden. Eines der weiteren elastischen Elemente kann beispielsweise zwischen einem der Fassungsteile und dem elastischen Element und / oder zwischen dem elastischen Element und dem ersten Trägerteil angeordnet sein.

In einem weiteren Aspekt betrifft die Erfindung eine Fronteinheit für ein Kraftfahrzeug mit einem erfindungsgemäßen Träger, einem hieran befestigten Stoßfänger und Scheinwerfereinheiten.

In einem weiteren Aspekt betrifft die Erfindung ein Verfahren zur Montage eines Trägers für eine Fronteinheit mit folgenden Schritten:
- Montage eines ersten Trägerteils des Trägers an einem Fahrgestell des Kraftfahrzeugs,
- elastische Deformation eines elastischen Elements des Trägers durch Schließen einer Frontklappe des Kraftfahrzeugs,
- Fixierung des elastischen Elements in seiner Deformationsposition.

Nach einer Ausführungsform der Erfindung erfolgt die Fixierung des elastischen Elements in seiner Deformationsposition durch eine Schraubverbindung mit dem Trägerteil des Trägers oder mit dem Fahrgestell.

Im Weiteren werden bevorzugte Ausführungsformen mit Bezugnahme auf die Zeichnungen näher erläutert. Es zeigen:
- Figur 1: eine schematische perspektivische Ansicht einer ersten Ausführungsform eines erfindungsgemäßen Trägers,
- Figur 2: eine perspektivische Ansicht einer zweiten Ausführungsform,
- Figur 3: eine perspektivische Ansicht einer dritten Ausführungsform,
- Figur 4: eine Schnittansicht einer weiteren Ausführungsform des Trägers bei der Montage in einem Kraftfahrzeug.

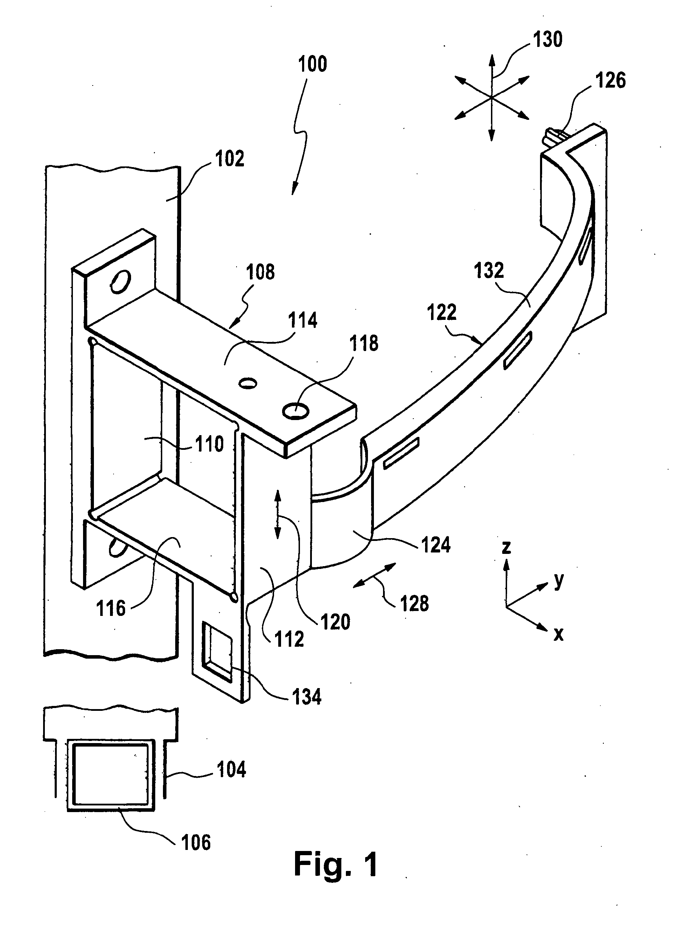

Die Figur 1 zeigt einen Träger 100 für eine Fronteinheit eines Kraftfahrzeugs (die Fronteinheit ist in der Figur 1 nicht dargestellt).

Der Träger 100 hat ein Trägerteil 102. Das Trägerteil 102 dient zur Verbindung des Trägers 100 mit einem Fahrgestell des Kraftfahrzeugs. Hierzu hat das Trägerteil 102 beispielsweise an seinem unteren Ende eine Halterung 104 zur Verbindung mit einem Längsträger 106 des Kraftfahrzeugs.

An dem Trägerteil 102 ist ein elastisches Element 108 angeordnet. Das elastische Element 108 ist in der hier betrachteten Ausführungsform parallelogrammartig ausgebildet. Das elastische Element 108 weist die im Wesentlichen jeweils parallel zueinander verlaufenden Schenkel 110, 112 sowie 114, 116 auf. Über seinen Schenkel 110 ist das elastische Element 108 zum Beispiel durch eine Schraubverbindung mit dem Trägerteil 102 fest verbunden.

Der Schenkel 114 des elastischen Elements 108 hat eine Auflagefläche 118 zur Einleitung einer Deformationskraft im wesentlichen in vertikaler Richtung, das heißt in -z-Richtung. Durch eine solche Deformationskraft kann das elastische Element 108 in Pfeilrichtung 120 deformiert werden.

An dem Schenkel 112 des elastischen Elements 108 ist ein Fassungsteil 122 über ein weiteres elastisches Element 124 befestigt. Das elastische Element 124 erlaubt einen Toleranzausgleich im Wesentlichen in seitliche, das heißt y-Richtung, wie durch den Pfeil 128 dargestellt.

An seinem Ende hat das Fassungsteil 122 einen Positionierstift 126 zum Eingriff in ein Montageloch eines Kotflügels. Da das Fassungsteil 122 eine gewisse Elastizität aufweist, hat der Positionierungsstift 126 verschiedene Freiheitsgrade, wie durch die Pfeile 130 in der Figur 1 gezeigt, so dass der Positionierstift 126 leicht in ein entsprechendes Montageloch an der Kotflügelbank eingeführt werden kann. Für den Toleranzausgleich in y-Richtung sorgt dabei das elastische Element 124, mit der das Fassungsteil 122 an dem elastischen Element 108 befestigt ist.

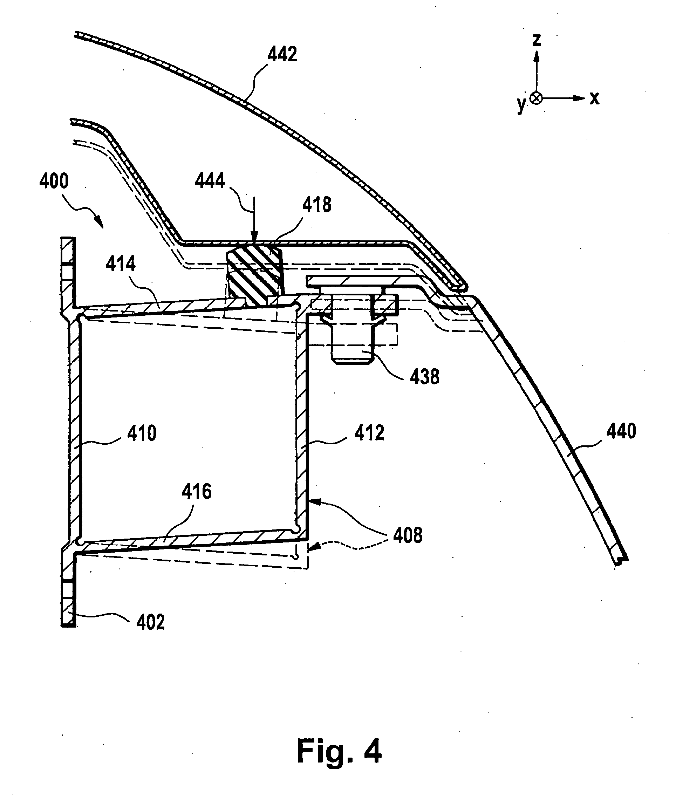

Das Fassungsteil 122 dient zur Aufnahme einer Scheinwerfereinheit (in den Figuren nicht dargestellt) sowie zur Befestigung eines Stoßfängers (vgl. Figur 4). Sowohl die Scheinwerfereinheit als auch der Stoßfänger werden mit Bezug auf eine obere Kante 132 des Fassungsteils 122 hieran befestigt, um ein qualitativ hochwertiges Fugenbild zu erreichen.

An einer von dem Schenkel 110 entfernten Position - in dem hier betrachten Ausführungsbeispiel an der Unterseite des Schenkels 116 - hat das elastische Element 108 eine Aufnahme 134 für eine Montageschraube. Nachdem das Trägerteil 102 an dem Fahrgestell, das heißt beispielsweise an dem Längsträger 106, des Kraftfahrzeugs vormontiert worden ist und das Fassungsteil 120 mittels des Positionierungsstifts 126 an einer der Kotflügelbänke vormontiert worden ist, wird eine Frontklappe (vgl. Figur 4) des Kraftfahrzeugs geschlossen, um eine Deformationskraft auf die Auflagefläche 118 auszuüben. Dadurch wird das elastische Element 108 in -z-Richtung deformiert.

In dieser Deformationsposition wird durch der Aufnahme 134 eine Schraubverbindung festgezogen, um das elastische Element in seiner Deformationsposition zu fixieren. Beispielsweise kann die Aufnahme 134 mit dem Trägerteil 102 oder mit einem Fahrgestellteil des Kraftfahrzeugs verschraubt werden. Dadurch kann ein Toleranzausgleich in z-Richtung erfolgen, so dass auch ein qualitativ hochwertiges Fugenbild mit Bezug auf die Frontklappe realisierbar ist, ohne die sonst oft erforderliche Justage der Verriegelungsvorrichtung für die Frontklappe und / oder anderer Nacharbeiten.

Die Figur 1 zeigt der Übersichtlichkeit halber lediglich die rechte Seite des Trägers mit seinem rechten elastischen Element 108 und seinem rechten Fassungsteil 122. Das Trägerteil 102 erstreckt sich auf die linke Fahrzeugseite und hat dort ein entsprechendes linkes elastisches Element und ein linkes Fassungsteil, welche symmetrisch zu den in der Figur 1 dargestellten Komponenten angeordnet sind.

Das Trägerteil 102 ist beispielsweise aus Metall oder einem Hybridmaterial. Das elastische Element 108 und das Fassungsteil 122 sind vorzugsweise als Kunststoffspritzgussteil zum Beispiel als Polypropylen oder aus Polyethylen gefertigt.

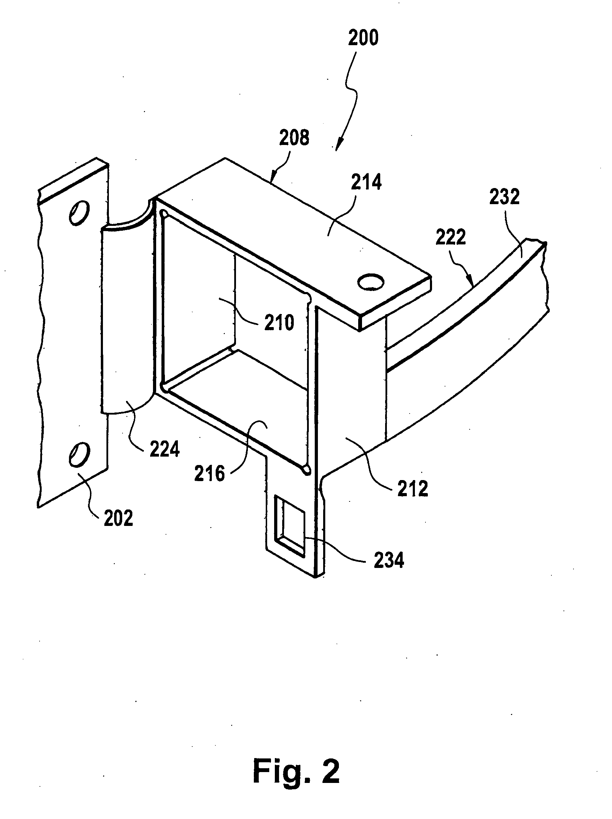

Die Figur 2 zeigt eine weitere Ausführungsform. Elemente der Figur 2, die Elementen der Figur 1 entsprechen, sind mit um 100 erhöhten Bezugszeichen gekennzeichnet. Bei der Ausführungsform der Figur 2 verbindet das elastische Element 224 das Trägerteil 202 und das elastische Element 208. Dies stellt eine Alternative zur Anordnung des entsprechenden elastischen Elements 124 nach der Ausführungsform der Figur 1 dar.

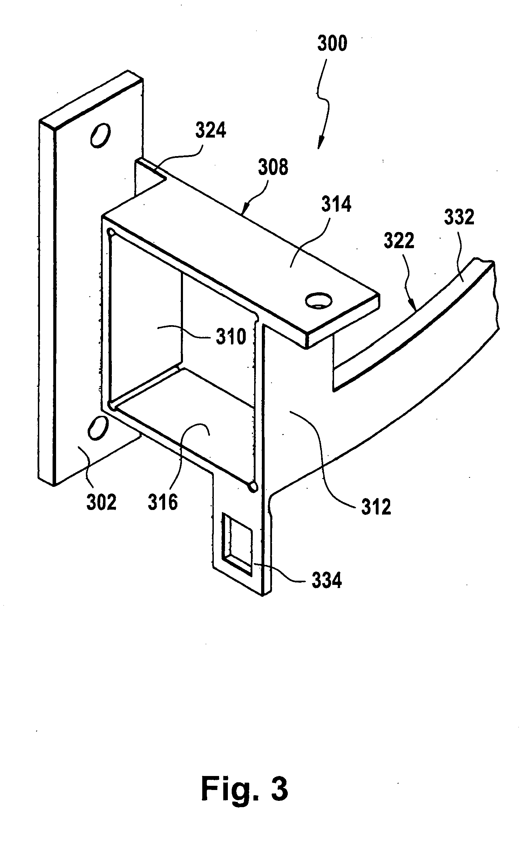

Die Figur 3 zeigt eine weitere Ausführungsform für die Anordnung des elastischen Elements 324. Elemente der Figur 3, die Elementen der Figur 2 entsprechen, sind wiederum mit 100 erhöhten Bezugszeichen gekennzeichnet.

Die Figur 4 zeigt eine weitere Ausführungsform eines erfindungsgemäßen Trägers 400. Elemente der Ausführungsform der Figur 4, die Elementen der Ausführungsformen der Figuren 1, 2 bzw. 3 entsprechen, sind wiederum mit entsprechend erhöhten Bezugszeichen gekennzeichnet. Die Figur 4 zeigt den Träger 400 in seiner nicht deformierten Form sowie mit gestrichelten Linien nach seiner Deformation.

Auf dem oberen Schenkel 414 des Trägers 400 ist ein Auflageelement 418 angeordnet, welches zum Beispiel aus Gummi oder aus Kunststoff besteht. Mittels eines Befestigungselements 438 ist ein Stoßfänger 440 an dem elastischen Element 408 und / oder an dem in der Figur 4 nicht gezeigten Fassungsteil befestigt.

Die Vormontage des Trägers 400 erfolgt bei geöffneter Frontklappe 442 des Kraftfahrzeugs. Nachdem der Träger 400 mit seinem Trägerteil 402 an dem Fahrgestell des Kraftfahrzeugs vormontiert worden ist, wird die Frontklappe 442 geschlossen, so dass diese eine Deformationskraft 444 über das Auflageelement 418 auf das elastische Element 408 ausübt. Durch diese Deformationskraft wird das elastische Element 408 in die gestrichelt gezeichnete Deformationsposition gebracht. In dieser Position wird das elastische Element 408 fixiert, wie zum Beispiel durch eine geeignete Schraubverbindung (vgl. hierzu zum Beispiel die Aufnahmen 134, 234 und 334 der Figuren 1, 2 bzw. 3).

In der nicht deformierten Position schließen die aufeinander stehenden Schenkel des elastischen Elements 408, also z. B. die Schenkel 410 und 414, einen Winkel von größer 90 Grad ein, so dass der Schenkel 414 leicht nach oben hervorsteht. Dadurch wird gewährleistet, dass beim Schließen der Frontklappe 442 in jedem Fall eine Deformation des elastischen Elements 408 erfolgt.

### Bezugszeichenliste

- 100: Träger
- 102: Trägerteil
- 104: Halterung
- 106: Längsträger
- 108: elastisches Element
- 110: Schenkel
- 112: Schenkel
- 114: Schenkel
- 116: Schenkel
- 118: Auflagefläche
- 120: Pfeilrichtung
- 122: Fassungsteil
- 124: elastisches Element
- 126: Positionierstift
- 128: Pfeil
- 130: Pfeil
- 132: obere Kante
- 134: Aufnahme
- 200: Träger
- 202: Trägerteil
- 208: elastisches Element
- 210: Schenkel
- 212: Schenkel
- 214: Schenkel
- 216: Schenkel
- 222: Fassungsteil
- 224: elastisches Element
- 232: obere Kante
- 234: Aufnahme
- 300: Träger
- 302: Trägerteil
- 308: elastisches Element
- 310: Schenkel
- 312: Schenkel
- 314: Schenkel
- 316: Schenkel
- 322: Fassungsteil
- 324: elastisches Element
- 332: obere Kante
- 334: Aufnahme
- 400: Träger
- 402: Trägerteil
- 408: elastisches Element
- 410: Schenkel
- 412: Schenkel
- 414: Schenkel
- 416: Schenkel
- 418: Auflageelement
- 438: Befestigungselement
- 440: Stoßfänger
- 442: Frontklappe
- 444: Deformationskraft

## Patentansprüche

1. Träger für eine Fronteinheit (440) eines Kraftfahrzeugs mit einem ersten Trägerteil (110; 210; 310; 410) zur Verbindung mit einem Fahrgestell (106) des Kraftfahrzeugs und linken und rechten Fassungsteilen (122; 222; 322), wobei die linken und rechten Fassungsteile jeweils zur Aufnahme einer Scheinwerfereinheit und zur Verbindung mit einem Stoßfänger (440) des Kraftfahrzeugs ausgebildet sind, und wobei die linken und rechten Fassungsteile mit linken und rechten elastischen Elementen (108; 208; 308; 408) mit dem ersten Trägerteil verbunden sind, **gekennzeichnet durch** Mittel (134; 234; 334) zur Fixierung der elastischen Elemente, welche ausgebildet sind, um die elastischen Elemente nach einer elastischen Deformation (444) in einer Montageposition relativ zu dem Fahrgestell an einem Fahrgestellteil des Kraftfahrzeugs zu fixieren, wobei die Mittel zur Fixierung der elastischen Elemente an den elastischen Elementen selbst angeordnet sind.

2. Träger nach Anspruch, 1 wobei die Mittel zur Fixierung zur Herstellung einer Schraubverbindung ausgebildet sind.

3. Träger nach Anspruch 1 oder 2, wobei die Mittel zur Fixierung zur Herstellung einer Verbindung mit dem ersten Trägerteil ausgebildet sind.

4. Träger nach einem der vorhergehenden Ansprüche, mit Mitteln (118; 418) zur Einleitung einer Deformationskraft (444) auf die elastischen Elemente in der Montageposition.

5. Träger nach Anspruch 4, wobei die Mittel zur Einleitung der Deformationskraft eine Auflage (118; 418) für eine Frontklappe (442) des Kraftfahrzeugs aufweisen, so dass die Deformationskraft bei geschlossener Frontklappe auf die elastischen Elemente wirkt.

6. Träger nach einem der vorhergehenden Ansprüche, wobei die elastischen Elemente parallelogrammartig ausgebildet sind.

7. Träger nach Anspruch 6, wobei die aufeinander stehenden Schenkel (410, 414; 416, 412) des parallelogrammartig ausgebildeten elastischen Elements vor der Deformation einen Winkel von > 90° einschließen.

8. Träger nach Anspruch 6 oder 7, wobei jedes der elastischen Elemente erste und zweite im wesentlichen parallel verlaufende Schenkelpaare (110, 114; 116, 112; 210, 214; 216, 212; 310, 314; 316, 312; 410, 414; 416, 412) aufweist, wobei ein erster Schenkel (110; 210; 310; 410) des ersten Schenkelpaares das betreffende elastische Element mit dem ersten Trägerteil (102; 202; 302; 402) verbindet, ein zweiter Schenkel (112; 212; 312; 412) des ersten Schenkelpaares das elastische Element mit einem der Fassungsteile (122; 222; 322) verbindet, und ein erster Schenkel (114; 214; 314; 414) des zweiten Schenkelpaars zur Einleitung der Deformationskraft von der Frontklappe ausgebildet ist.

9. Träger nach Anspruch 8, wobei der erste Schenkel des zweiten Schenkelpaars eine Auflagefläche (118; 418) für die Frontklappe aufweist.

10. Träger nach Anspruch 8 oder 9, wobei an einer von dem ersten Schenkel des ersten Schenkelpaars entfernten Position an dem elastischen Element eine Aufnahme (134; 234; 334) für eine Schraubverbindung zur Fixierung des elastischen Elements nach der elastischen Deformation angeordnet ist.

11. Träger nach einem der vorhergehenden Ansprüche, mit zweiten elastischen Elementen (124; 224; 324) zur Befestigung der Fassungsteile an dem ersten Trägerteil, wobei die zweiten elastischen Elemente für eine elastische Deformation in einer Richtung, die im wesentlichen senkrecht zu einer Richtung der elastischen Deformation der linken und rechten elastischen Elemente ist, ausgebildet sind.

12. Träger nach Anspruch 11, wobei zumindest eines der zweiten elastischen Elemente (124; 224; 324) zur Verbindung eines der Fassungsteile mit dem linken oder rechten elastischen Element ausgebildet ist.

13. Träger nach Anspruch 11 oder 12, wobei zumindest eines der zweiten elastischen Elemente (124; 224; 324) zur Verbindung des linken oder rechten elastischen Elements mit dem ersten Trägerteil ausgebildet ist.

14. Fronteinheit für ein Kraftfahrzeug mit einem Träger nach einem der vorhergehenden Ansprüche.

15. Verfahren zur Montage eines Trägers (100; 200; 300; 400) für eine Fronteinheit eines Kraftfahrzeugs nach einem der vorhergenden Ansprüche 1 bis 13, wobei der Träger ein erstes Trägerteil (102; 202; 302; 402) zur Verbindung mit einem Fahrgestell (106) des Kraftfahrzeugs und linke und rechte Fassungsteile (122; 222; 322) aufweist, wobei die linken und rechten Fassungsteile jeweils zur Aufnahme einer Scheinwerfereinheit und zur Verbindung mit einem Stoßfänger (440) des Kraftfahrzeugs ausgebildet sind, mit folgenden Schritten:
- Montage des ersten Trägerteils an dem Fahrgestell des Kraftfahrzeugs,
- elastische Deformation des Trägers durch Schließen einer Fronthaube (442) des Kraftfahrzeugs,
- Fixierung des Trägers in der sich daraus ergebenden Deformationsposition.

## Claims

1. Support for a front module (440) of a motor vehicle, having a first support part (110; 210; 310; 410) for connecting to a chassis (106) of the motor vehicle and left-hand and right-hand holding parts (122; 222; 322), with the left-hand and right-hand holding parts being designed in each case for holding a headlamp unit and for connecting to a bumper (440) of the motor vehicle, and with the left-hand and right-hand holding parts being connected by means of left-hand and right-hand elastic elements (108; 208; 308; 408) to the first support part, **characterized by** means (134; 234; 334) for fixing the elastic elements, which means (134; 234; 334) are designed for fixing the elastic elements to a chassis part of the motor vehicle in a mounted position relative to the chassis after an elastic deformation (444), with the means for fixing the elastic elements being arranged on the elastic elements themselves.

2. Support according to Claim 1, with the means for fixing being designed to produce a screw connection.

3. Support according to Claim 1 or 2, with the means for fixing being designed to produce a connection to the first support part.

4. Support according to one of the preceding claims, having means (118; 418) for introducing a deformation force (444) into the elastic elements in the mounted position.

5. Support according to Claim 4, with the means for introducing the deformation force having a rest (118; 418) for a bonnet (442) of the motor vehicle, such that the deformation force acts on the elastic elements when the bonnet is closed.

6. Support according to one of the preceding claims, with the elastic elements being formed in the manner of a parallelogram.

7. Support according to Claim 6, with the limbs (410, 414; 416, 412), which extend from one another, of the elastic element which is formed in the manner of a parallelogram enclosing an angle of > 90° before the deformation.

8. Support according to Claim 6 or 7, with each of the elastic elements having first and second substantially parallel running limb pairs (110, 114; 116, 112; 210, 214; 216, 212; 310, 314; 316, 312; 410, 414; 416, 412), with a first limb (110; 210; 310; 410) of the first limb pair connecting the respective elastic element to the first support part (102; 202; 302; 402), with a second limb (112; 212; 312; 412) of the first limb pair connecting the elastic element to one of the holding parts (122; 222; 322), and with a first limb (114; 214; 314; 414) of the second limb pair being designed to introduce the deformation force from the bonnet.

9. Support according to Claim 8, with the first limb of the second limb pair having a rest surface (118; 418) for the bonnet.

10. Support according to Claim 8 or 9, with a receptacle (134; 234; 334) for a screw connection for fixing the elastic element after the elastic deformation being arranged on the elastic element at a position remote from the first limb of the first limb pair.

11. Support according to one of the preceding claims, having second elastic elements (124; 224; 324) for fastening the holding parts to the first support part, with the second elastic elements being designed for an elastic deformation in a direction which is substantially perpendicular to a direction of the elastic deformation of the left-hand and right-hand elastic elements.

12. Support according to Claim 11, with at least one of the second elastic elements (124; 224; 324) being designed for connecting one of the holding parts to the left-hand or right-hand elastic element.

13. Support according to Claim 11 or 12, with at least one of the second elastic elements (124; 224; 324) being designed for connecting the left-hand or right-hand elastic element to the first support part.

14. Front module for a motor vehicle having a support according to one of the preceding claims.

15. A method for mounting a support (100; 200; 300; 400) for a front module of a motor vehicle according to one of the preceding Claims 1 to 13, with the support having a first support part (102; 202; 302; 402) for connecting to a chassis (106) of the motor vehicle and left-hand and right-hand holding parts (122; 222; 322), with the left-hand and right-hand holding parts being designed in each case for holding a headlamp unit and for connecting to a bumper (440) of the motor vehicle, having the following steps:
- mounting the first support part on the chassis of the motor vehicle,
- elastically deforming the support by closing a bonnet (442) of the motor vehicle,
- fixing the support in the resulting deformation position.

## Revendications

1. Support pour une unité avant (440) d'un véhicule automobile comprenant une première partie de support (110 ; 210 ; 310 ; 410) pour la connexion à un châssis (106) du véhicule automobile, et des parties d'encadrement gauche et droite (122 ; 222 ; 322), les parties d'encadrement gauche et droite étant réalisées à chaque fois pour recevoir une unité de phare et pour être connectées à un pare-chocs (440) du véhicule automobile, et les parties d'encadrement gauche et droite étant connectées par des éléments élastiques gauche et droit (108 ; 208 ; 308 ; 408) à la première partie de support, **caractérisé par** des moyens (134 ; 234 ; 334) pour la fixation des éléments élastiques, qui sont réalisés de manière à fixer les éléments élastiques après une déformation élastique (444) dans une position de montage par rapport au châssis sur une partie de châssis du véhicule automobile, les moyens pour la fixation des éléments élastiques étant disposés sur les éléments élastiques eux-mêmes.

2. Support selon la revendication 1, dans lequel les moyens pour la fixation sont réalisés pour établir une connexion vissée.

3. Support selon la revendication 1 ou 2, dans lequel les moyens pour la fixation sont réalisés pour établir une connexion à la première partie de support.

4. Support selon l'une quelconque des revendications précédentes, comprenant des moyens (118 ; 418) pour introduire une force de déformation (444) sur les éléments élastiques dans la position de montage.

5. Support selon la revendication 4, dans lequel les moyens pour introduire la force de déformation présentent un appui (118 ; 418) pour un volet avant (442) du véhicule automobile, de sorte que la force de déformation agisse sur les éléments élastiques lorsque le volet avant est fermé.

6. Support selon l'une quelconque des revendications précédentes, dans lequel les éléments élastiques sont réalisés sous forme de parallélogramme.

7. Support selon la revendication 6, dans lequel les branches superposées (410, 414 ; 416, 412) de l'élément élastique réalisé en forme de parallélogramme forment avant la déformation un angle de > 90°.

8. Support selon la revendication 6 ou 7, dans lequel chacun des éléments élastiques présente des première et deuxième paires de branches s'étendant essentiellement parallèlement (110, 114 ; 116, 112 ; 210, 214 ; 216, 212 ; 310, 314 ; 316, 312 ; 410, 414 ; 416, 412), une première branche (110 ; 210 ; 310 ; 410) de la première paire de branches relie l'élément élastique concerné à la première partie de support (102 ; 202 ; 302 ; 402), une deuxième branche (112 ; 212 ; 312 ; 412) de la première paire de branches relie l'élément élastique à l'une des parties d'encadrement (122 ; 222 ; 322), et une première branche (114 ; 214 ; 314 ; 414) de la deuxième paire de branches est réalisée pour introduire la force de déformation du volet avant.

9. Support selon la revendication 8, dans lequel la première branche de la deuxième paire de branches présente une surface d'appui (118 ; 418) pour le volet avant.

10. Support selon la revendication 8 ou 9, dans lequel, en une position éloignée de la première branche de la première paire de branches, sur l'élément élastique, un logement (134 ; 234 ; 334) est prévu pour une connexion par vissage pour la fixation de l'élément élastique après la déformation élastique.

11. Support selon l'une quelconque des revendications précédentes, comprenant des deuxièmes éléments élastiques (124 ; 224 ; 324) pour la fixation des parties d'encadrement sur la première partie de support, les deuxièmes éléments élastiques étant réalisés pour une déformation élastique dans une direction qui est essentiellement perpendiculaire à une direction de la déformation élastique des éléments élastiques gauche et droit.

12. Support selon la revendication 11, dans lequel au moins l'un des deuxièmes éléments élastiques (124 ; 224 ; 324) est réalisé pour la connexion de l'une des parties d'encadrement à l'élément élastique gauche ou droit.

13. Support selon la revendication 11 ou 12, dans lequel au moins l'un des deuxièmes éléments élastiques (124 ; 224 ; 324) est réalisé pour la connexion de l'élément élastique gauche ou droit à la première partie de support.

14. Unité avant pour un véhicule automobile comprenant un support selon l'une quelconque des revendications précédentes.

15. Procédé de montage d'un support (100 ; 200 ; 300 ; 400) pour une unité avant d'un véhicule automobile selon l'une quelconque des revendications précédentes 1 à 13, dans lequel le support présente une première partie de support (102 ; 202 ; 302 ; 402) pour la connexion à un châssis (106) du véhicule automobile et des parties d'encadrement gauche et droite (122 ; 222 ; 322), les parties d'encadrement gauche et droite étant à chaque fois réalisées pour recevoir une unité de phare et pour la connexion à un pare-chocs (440) du véhicule automobile, le procédé comprenant les étapes suivantes :
- montage de la première partie de support sur le châssis du véhicule automobile ;
- déformation élastique du support par fermeture d'un capot avant (442) du véhicule automobile,
- fixation du support dans la position de déformation qui en résulte.
